# EUROPÄISCHE PATENTANMELDUNG

(11) **EP 0 831 175 A2**
(43) Veröffentlichungstag der Anmeldung: **25.03.1998**
(21) Anmeldenummer: 97111138.0
(22) Anmeldetag: 03.07.1997
(51) Int. Cl.: D21F 3/08

(54) **Presswalze**

(30) Priorität: 20.08.1996 DE 19633543
(71) Anmelder: Voith Sulzer Papiermaschinen GmbH, 89509 Heidenheim (DE)
(72) Erfinder: Schiel, Christian, 82481 Murnau (DE); Wieland, Ulrich, 88276 Berg (DE)

(57) **Zusammenfassung**

Eine Preßwalze (10) zur Behandlung einer Materialbahn in einem mit einer Gegenfläche gebildeten Preßspalt umfaßt einen Walzenmantel (12), einen diesen durchsetzenden Träger sowie zwei drehbar am Träger gelagerte Stirnwände (16), an denen die beiden Endabschnitte (18) des Walzenmantels (12) dichtend befestigt sind, wobei wenigstens einer der beiden Endabschnitte (18) an der betreffenden Stirnwand (16) festgeklemmt ist. Zum Festklemmen eines jeweiligen Endabschnitts (18) des Walzenmantels (12) ist wenigstens ein um eine Außenumfangsfläche (20) der Stirnwand (16) geführtes Spannband (22) und/oder ein mit zumindest einer, vorzugsweise mehreren Windungen um die Außenumfangsfläche (20) geführter hochfester Faden (38) oder dergleichen vorgesehen ist, um den Endabschnitt (18) des Walzenmantels (12) gegen diese Außenumfangsfläche (20) der Stirnwand (16) zu pressen und an dieser festzulegen.

## Beschreibung

Die Erfindung betrifft eine Preßwalze zur Behandlung einer Materialbahn in einem mit einer Gegenfläche gebildeten Preßspalt, mit einem Walzenmantel, einem diesen durchsetzenden Träger, wenigstens einem insbesondere hydrodynamisch und/oder hydrostatisch geschmierten Stützelement, durch das der Walzenmantel im Bereich des Preßspaltes auf dem Träger abgestützt ist, und zwei drehbar am Träger gelagerten Stirnwänden, an denen die beiden Endabschnitte des Walzenmantels dichtend befestigt sind, wobei wenigstens einer der beiden Endabschnitte an der betreffenden Stirnwand festgeklemmt ist.

Der in der Regel tuchartige Walzenmantel einer derartigen Preßwalze muß aufgrund des auftretenden Verschleißes regelmäßig ausgetauscht werden. Hierzu muß der auszutauschende Walzenmantel zunächst von den Stirnwänden gelöst werden. Anschließend ist der neue Walzenmantel wiederum so an den Stirnwänden zu befestigen, daß die erforderliche Abdichtung sichergestellt ist. Die jeweilige Art der Befestigung und Abdichtung ist entscheidend für die sich jeweils ergebenden Stillstandszeiten der betreffenden Walzenanordnung.

Bei einer aus der DE 35 01 635 C2 bekannten Preßwalze der eingangs genannten Art wird ein jeweiliger Endabschnitt des Walzenmantels mittels eines Spannflansches gegen die äußere Stirnseite der betreffenden Stirnwand gepreßt, wozu es erforderlich ist, daß der Endabschnitt radial nach innen umgebogen wird. Um dies zu ermöglichen, ist der Endabschnitt des Walzenmantels mit einer Vielzahl von Einschnitten versehen. Zum Zentrieren des Walzenmantels sind an der Stirnwand Vorsprünge vorgesehen, die bei montiertem Mantel in dessen randseitige Einschnitte eingreifen.

Der Erfindung liegt die Aufgabe zugrunde, eine Preßwalze der eingangs genannten Art zu schaffen, bei der die Befestigung eines jeweiligen Walzenmantels unter Gewährleistung einer zuverlässigen Abdichtung vereinfacht ist und insbesondere auch dickere und steifere Walzenmäntel sowie Walzenmäntel mit in gewissen Grenzen unterschiedlichen Durchmessern auf zuverlässige Weise problemlos befestigbar sind.

Die Aufgabe wird nach der Erfindung dadurch gelöst, daß zum Festklemmen eines jeweiligen Endabschnitts des Walzenmantels wenigstens ein um eine Außenumfangsfläche der Stirnwand geführtes Spannband und/oder ein mit zumindest einer, vorzugsweise mehreren Windung um die Außenumfangsfläche geführter hochfester Faden oder dergleichen vorgesehen ist, um den Endabschnitt des Walzenmantels gegen diese Außenumfangsfläche der Stirnwand zu pressen und an dieser festzulegen.

Aufgrund dieser Ausbildung ist mit deutlich geringerem Aufwand und entsprechend geringeren Kosten eine äußerst zuverlässige und rasche Luft- und öldichte Befestigung eines jeweiligen Walzenmantels möglich. Die Stillstandszeiten der betreffenden Walzenanordnung können entsprechend kurz gehalten werden. Zudem ergibt sich eine bessere Anpassung an unterschiedliche Manteldurchmesser. Auch die Verwendung relativ dickerer und steiferer Walzenmäntel ist problemlos möglich. Ein weiterer Vorteil besteht darin, daß die Mantelenden gerade geschnitten sein können.

Eine besonders zuverlässige Befestigung erreicht man, wenn die Außenumfangsfläche der Stirnwand mit einer ringförmigen Umfangsnut versehen ist und ein der Umfangsnut gegenüberliegender Bereich des Endabschnitts des Walzenmantels durch das Spannband bzw. den hochfesten Faden in die Umfangsnut gepreßt und in dieser festgelegt ist.

Statt eines Spannbandes oder eines Fadens kann auch ein bei erhöhter Temperatur in Umfangsrichtung schrumpfender Ring aus Kunststoff verwendet werden.

Die Haftung des Walzenmantels an der Außenumfangsfläche der Stirnwand läßt sich dadurch weiter erhöhen, daß diese Außenumfangsfläche in einem dem Spannband bzw. hochfesten Faden gegenüberliegenden Bereich mit Rillen versehen ist. Diese können auch mit gummielastischem Material oder dergleichen gefüllt sein.

Eine besonders zuverlässige Abdichtung erhält man dann, wenn zwischen der Außenumfangsfläche der Stirnwand und dem angepreßten Bereich des Endabschnitts des Walzenmantels eine Ringdichtung angeordnet ist, die vorzugsweise in eine in der Außenumfangsfläche ausgebildete ringnutartige Aufnahme eingesetzt ist. Um einen sicheren Halt dieser Ringdichtung zu gewährleisten, kann sich die ringnutartige Dichtungsaufnahme radial nach außen verjüngen. Bei einer zweckmäßigen praktischen Ausführungsform umfaßt die Ringdichtung eine Gummischnur.

Für einen noch zuverlässigeren Sitz des Endabschnitts des Walzenmantels auf der Außenumfangsfläche der Stirnwand ist gesorgt, wenn sich der Endabschnitt des Walzenmantels mit seinem freien Ende über die Umfangsnut hinaus axial nach außen erstreckt.

In dem Fall, daß zum Festklemmen des Endabschnitts des Walzenmantels auf der Außenumfangsfläche der Stirnwand ein hochfester Faden verwendet wird, ist dieser vorzugsweise mit mehreren Windungen um die Außenumfangsfläche der Stirnwand geführt, wobei die Fadenenden miteinander verknotet und/oder die Fadenwindungen miteinander verklebt sind. Hierbei können die Fadenwindungen durch einen vorzugsweise nach dem Festklemmen des Endabschnitts des Walzenmantels aufgebrachten Klebstoff miteinander verklebt sein. Ein solcher Klebstoff kann beispielsweise aufgepinselt werden.

Bei einer in der Praxis bevorzugten Ausführungsform ist der Klemmbereich, in dem der Endabschnitt des Walzenmantels durch das Spannband bzw. den hochfesten Faden an der Außenumfangsfläche der Stirnwand festgelegt ist, durch eine sich über den Umfang der Stirnwand erstreckende Abdeckung geschützt.

Eine solche Abdeckung kann mehrere über den Umfang der Stirnwand verteilte, beispielsweise aus Blech bestehende Segmente umfassen, oder beispielsweise auch durch einen in Umfangsrichtung über den Klemmbereich geführten Gummiring oder dergleichen gebildet sein.

In den Unteransprüchen sind weitere vorteilhafte Ausführungsvarianten der erfindungsgemäßen Preßwalze angegeben.

Die Erfindung wird im folgenden anhand von Ausführungsbeispielen unter Bezugnahme auf die Zeichnung näher beschrieben; in dieser zeigen:
- Figur 1: einen radialen Teilschnitt durch ein Ende einer Ausführungsvariante einer Preßwalze,
- Figur 2: einen radialen Teilschnitt durch ein Ende einer weiteren Ausführungsvariante einer Preßwalze,
- Figur 3: eine Figur 2 vergleichbare Darstellung einer weiteren Ausführungsvariante einer Preßwalze und
- Figur 4: eine Figur 2 vergleichbare Darstellung einer weiteren Ausführungsvariante einer Preßwalze.

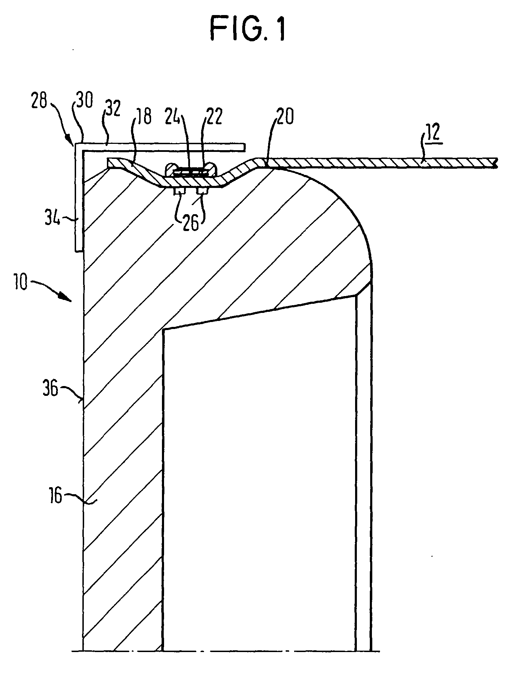

Figur 1 zeigt einen Ausschnitt der oberen Hälfte des linken Teils einer Preßwalze 10, die zur Behandlung einer Materialbahn in einem mit einer nicht gezeigten Gegenfläche gebildeten Preßspalt dient. Diese Gegenfläche kann beispielsweise durch eine Gegenwalze gebildet sein.

Die Preßwalze 10 umfaßt einen flexiblen Walzenmantel 12 sowie einen diesen durchsetzenden, nicht dargestellten Träger. Im zwischen den beiden Walzenenden gelegenen, mit der Gegenfläche den Preßspalt bildenden Bereich ist der Walzenmantel 12 durch wenigstens ein (nicht gezeigtes) Stützelement abgestützt. Hierbei kann es sich um ein hydrodynamisch und/oder hydrostatisch geschmiertes Stützelement handeln, das vorzugsweise hydraulisch gegen die Mantelinnenseite gepreßt wird. Zwischen dieser und dem Stützelement wird auf hydrodynamische bzw. hydrostatische Weise ein Schmierfilm erzeugt.

Auf dem Träger sind zwei Stirnwände 16 drehbar abgestützt, von denen lediglich die linke gezeigt ist. An diesen Stirnwänden 16 sind die beiden Endabschnitte 18 des Walzenmantels 12 Luft- und öldicht befestigt. Hierbei ist zumindest einer dieser beiden Endabschnitte 18 an der betreffenden Stirnwand 16 in der dargestellten und weiter unten näher beschriebenen Weise festgeklemmt.

Zum Festklemmen des jeweiligen Endabschnitts 18 des Walzenmantels 12 ist gemäß Figur 1 ein um eine Außenumfangsfläche 20 der Stirnwand 16 geführtes Spannband 22 vorgesehen, durch das der Endabschnitt 18 des Walzenmantels 12 gegen die Außenumfangsfläche 20 der Stirnwand 16 gepreßt und an dieser festgelegt wird.

Hierbei ist die Außenumfangsfläche 20 der Stirnwand 16 mit einer ringförmigen Umfangsnut 24 versehen, in die der gegenüberliegende Bereich des Endabschnitts 18 durch das Spannband 22 gepreßt wird, so daß der Walzenmantel 12 mit diesem Bereich seines Endabschnitts 18 in der Umfangsnut 24 festgelegt ist.

Beim in Figur 1 dargestellten Ausführungsbeispiel ist der Boden der Umfangsnut 24 mit Rillen 26 versehen, die beispielsweise mit gummielastischem Material gefüllt sein können, um die Haftung des Endabschnitts 18 des Walzenmantels 12 an der Außenumfangsfläche 20 der Stirnwand 16 weiter zu erhöhen.

Zudem erstreckt sich der Endabschnitt 18 des Walzenmantels 12 mit seinem freien Ende über die Umfangsnut 24 hinaus axial nach außen.

Wie in Figur 1 ferner zu erkennen ist, ist der Klemmbereich, in dem der Endabschnitt 18 des Walzenmantels 12 durch das Spannband 22 an der Außenumfangsfläche 20 bzw. in der Umfangsnut 24 der Stirnwand 16 festgelegt ist, durch eine sich über den Umfang der Stirnwand 16 erstreckende Abdeckung 28 geschützt.

Diese Abdeckung 28 umfaßt im vorliegenden Fall mehrere über den Umfang der Stirnwand 16 verteilte, vorzugsweise aus Blech bestehende Segmente 30. Diese die Abdeckung 28 bildenden Segmente 30 besitzen jeweils ein winkelartiges Querschnittsprofil mit einem sich allgemein axial erstreckenden, den Klemmbereich überdeckenden Abschnitt 32 und einem sich allgemein radial nach innen erstreckenden Abschnitt 34, der im in der Figur 1 gezeigten montierten Zustand an der axial äußeren, d.h. linken Stirnseite 36 der Stirnwand 16 anliegt.

Die Segmente 30 können somit in Axialrichtung auf die Stirnwand 16 aufgesteckt werden.

Grundsätzlich kann diese Abdeckung jedoch auch durch einen in Umfangsrichtung über den Klemmbereich geführten Gummiring oder dergleichen gebildet sein.

Das Spannband 22 kann eine oder mehrere Verstärkungseinlagen aufweisen. Grundsätzlich ist es denkbar, ein Spannband in der Art eines Verpackungsbandes oder dergleichen zu verwenden.

Die Stirnwand 16 kann mittels eines Drehlagers auf einem Lagerring drehbar gelagert sein, der bezüglich des Trägers axial verschiebbar ist (nicht gezeigt). Damit kann der Walzenmantel 12 durch ein entsprechendes axiales Verschieben des Lagerringes gespannt werden, nachdem die Endabschnitte 18 durch das Spannband 22 an der Stirnwand 16 befestigt und festgelegt ist.

Während der Montage des vorzugsweise tuchartigen Walzenmantels 12 kann die Preßwalze 10 mit Innendruck beaufschlagt werden, wodurch der Walzenmantel 12 zylindrisch ausgerichtet und zentriert wird.

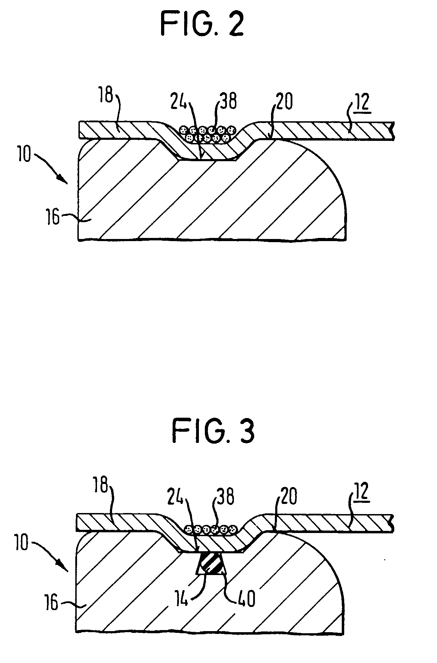

Figur 2 zeigt eine weitere Ausführungsvariante einer Preßwalze 10, bei der anstelle des Spannbandes 22 gemäß Figur 1 ein mit mehreren Windungen um die Außenumfangsfläche 20 geführter hochfester Faden 38 vorgesehen ist.

Die Außenumfangsfläche 20 der Stirnwand 16 ist auch wiederum mit einer ringförmigen Umfangsnut 24 versehen, wobei der dieser Umfangsnut 24 gegenüberliegende Bereich des Endabschnitts 18 des Walzenmantels nunmehr durch den mehrere Windungen aufweisenden hochfesten Faden 38 in diese Umfangsnut 24 gepreßt und in dieser festgelegt wird.

Auch in diesem Fall erstreckt sich der Endabschnitt 18 des Walzenmantels 12 mit seinem freien Ende wieder über die Umfangsnut 24 hinaus axial nach außen.

Bei diesem mit mehreren Windungen um die Außenumfangsfläche 20 der Stirnwand 16 geführten hochfesten Faden sind die Fadenenden miteinander verknotet und/oder die Fadenwindungen miteinander verklebt. Hierbei werden die Fadenwindungen durch einen vorzugsweise nach dem Festklemmen des Endabschnitts 18 des Walzenmantels 12 aufgebrachten Klebstoff miteinander verklebt, der beispielsweise aufgepinselt werden kann. Die Fadenenden können auch mittels einer Klemmhülse verbunden sein.

Der Klemmbereich, in dem der Abschnitt 18 des Walzenmantels 12 durch den hochfesten Faden 38 an der Außenumfangsfläche der Stirnwand 16 festgelegt ist, kann wiederum durch eine sich über den Umfang der Stirnwand 16 erstreckende, hier nicht dargestellte Abdeckung insbesondere der in der Figur 1 gezeigten Art geschützt sein.

Bei der in Figur 3 gezeigten weiteren Ausführungsvariante einer Preßwalze 10 ist im Boden der Umfangsnut 24 eine ringnutartige Dichtungsaufnahme 40 ausgebildet, in die eine beim vorliegenden Ausführungsbeispiel durch eine Rundschnur gebildete Ringdichtung 14 eingesetzt ist. Wie in Figur 3 zu erkennen ist, verjüngt sich die ringnutartige Dichtungsaufnahme 40 radial nach außen, so daß die Ringdichtung 14 unverlierbar in dieser ringnutartigen Dichtungsaufnahme 40 gehalten wird.

Der der Umfangsnut 24 der Stirnwand 16 gegenüberliegende Bereich des Endabschnitts 18 des Walzenmantels 12 wird ebenso wie bei dem in der Figur 2 dargestellten Ausführungsbeispiel durch einen mehrere Windungen aufweisenden hochfesten Faden 38 in die Umfangsnut 24 gepreßt und in dieser festgelegt.

Grundsätzlich ist es auch denkbar, eine solche Ringdichtung 14 in Verbindung mit einem in Figur 1 gezeigten Spannband 22 zu verwenden.

Auch bei den in den Figuren 2 und 3 gezeigten Ausführungsvarianten ist die Stirnwand 16 über ein Drehlager wieder drehbar auf einem bezüglich des Trägers axial verstellbaren Lagerring gelagert (nicht dargestellt), der, ebenso wie bei der Ausführung gemäß Figur 1, auf einem dem Träger zugeordneten Lagerzapfen oder dergleichen angeordnet sein kann.

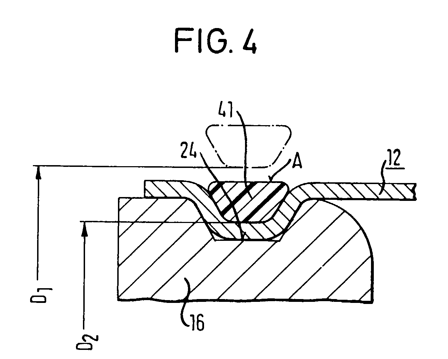

Gemäß Figur 4 ist anstelle eines Spannbandes ein Spannring 41 aus in Umfangsrichtung vorgerecktem Kunststoff mit dem Innendurchmesser D₁ vorgesehen.

Durch Erwärmung seiner Außenfläche A wird der Ring auf eine erhöhte Temperatur von ca. 70 bis 150°C gebracht, wodurch dieser im Umfang auf D₂ schrumpft und den Preßmantel 12 in die Umfangsnut 24 drückt. Anstelle des massiven Ringes kann auch ein Strang aus thermisch schrumpfbaren Einzelfäden verwendet werden.

Bei sämtlichen Ausführungsvarianten ist trotz des äußerst einfachen und entsprechend kostengünstigen Aufbaus stets eine Luft- und öldichte Befestigung gewährleistet. Abweichungen des Manteldurchmessers können problemlos kompensiert werden. Ein Zentrieren des Walzenmantels ist ohne weiteres möglich, indem dieser beispielsweise während der Montage mit Innendruck beaufschlagt wird. Hierdurch ergibt sich automatisch eine zylindrische Ausrichtung. Ein jeweiliger Mantelwechsel ist problemlos und rasch möglich, so daß Stillstandszeiten der betreffenden Walzenanordnung möglichst kurz gehalten werden.

### Bezugszeichenliste

- 10: Preßwalze
- 12: Walzenmantel
- 14: Ringdichtung
- 16: Stirnwand
- 18: Endabschnitt
- 20: Außenumfangsfläche
- 22: Spannband
- 24: Umfangsnut
- 26: Rillen
- 28: Abdeckung
- 30: Segmente
- 32: axialer Abschnitt
- 34: radialer Abschnitt
- 36: Stirnseite
- 38: Faden
- 40: ringnutartige Dichtungsaufnahme
- 41: Spannring
- D₁: Innendurchmesser
- D₂: Innendurchmesser

## Patentansprüche

1. Preßwalze (10) zur Behandlung einer Materialbahn in einem mit einer Gegenfläche gebildeten Preßspalt, mit einem Walzenmantel (12), einem diesen durchsetzenden Träger, wenigstens einem insbesondere hydrodynamisch und/oder hydrostatisch geschmierten Stützelement, durch das der Walzenmantel (12) im Bereich des Preßspaltes auf dem Träger abgestützt ist, und zwei drehbar am Träger gelagerten Stirnwänden (16), an denen die beiden Endabschnitte (18) des Walzenmantels (12) dichtend befestigt sind, wobei wenigstens einer der beiden Endabschnitte (18) an der betreffenden Stirnwand (16) festgeklemmt ist,
dadurch **gekennzeichnet,**
daß zum Festklemmen eines jeweiligen Endabschnitts (18) des Walzenmantels (12) wenigstens ein um eine Außenumfangsfläche (20) der Stirnwand (16) geführtes Spannband (22) und/oder ein mit zumindest einer, vorzugsweise mehreren Windung um die Außenumfangsfläche (20) geführter hochfester Faden (38) oder dergleichen vorgesehen ist, um den Endabschnitt (18) des Walzenmantels (12) gegen diese Außenumfangsfläche (20) der Stirnwand (16) zu pressen und an dieser festzulegen.

2. Preßwalze nach Anspruch 1,
dadurch **gekennzeichnet,**
daß die Außenumfangsfläche (20) der Stirnwand (16) mit einer ringförmigen Umfangsnut (24) versehen ist und daß ein der Umfangsnut (24) gegenüberliegender Bereich des Endabschnitts (18) des Walzenmantels (12) durch das Spannband (22) bzw. den hochfesten Faden in die Umfangsnut (24) gepreßt und in dieser festgelegt ist.

3. Preßwalze nach Anspruch 1 oder 2,
dadurch **gekennzeichnet,**
daß die Außenumfangsfläche (20) der Stirnwand (16) in einem dem Spannband (22) bzw. hochfesten Faden (38) gegenüberliegenden Bereich mit Rillen (26) versehen ist.

4. Preßwalze nach einem der vorhergehenden Ansprüche,
dadurch **gekennzeichnet,**
daß die Rillen (26) innerhalb der Umfangsnut (24) vorgesehen sind.

5. Preßwalze nach einem der vorhergehenden Ansprüche,
dadurch **gekennzeichnet,**
daß zwischen der Außenumfangsfläche (20) der Stirnwand (16) und dem angepreßten Bereich des Endabschnitts (18) des Walzenmantels (12) eine Ringdichtung (14) angeordnet ist, die vorzugsweise in eine in der Außenumfangsfläche (20) ausgebildete ringnutartige Aufnahme (40) eingesetzt ist.

6. Preßwalze nach Anspruch 5,
dadurch **gekennzeichnet,**
daß die ringnutartige Dichtungsaufnahme (40) im Boden der Umfangsnut (24) ausgebildet ist.

7. Preßwalze nach einem der vorhergehenden Ansprüche,
dadurch **gekennzeichnet,**
daß sich die ringnutartige Dichtungsaufnahme (40) radial nach außen verjüngt.

8. Preßwalze nach einem der vorhergehenden Ansprüche,
dadurch **gekennzeichnet,**
daß die Ringdichtung (14) eine Rundschnur umfaßt.

9. Preßwalze nach einem der vorhergehenden Ansprüche,
dadurch **gekennzeichnet,**
daß sich der Endabschnitt (18) des Walzenmantels (12) mit seinem freien Ende über die Umfangsnut (24) hinaus axial nach außen erstreckt.

10. Preßwalze nach einem der vorhergehenden Ansprüche,
dadurch **gekennzeichnet,**
daß der hochfeste Faden (38) mit mehreren Windung um die Außenumfangsfläche (20) der Stirnwand (16) geführt ist und daß die Fadenenden miteinander verknotet und/oder die Fadenwindungen miteinander verklebt sind.

11. Preßwalze nach Ansprch 10,
dadurch **gekennzeichnet,**
daß die Fadenwindungen durch einen vorzugsweise nach dem Festklemmen des Endabschnitts (18) des Walzenmantels (12) aufgebrachten Klebstoff miteinander verklebt sind.

12. Preßwalze nach einem der vorhergehenden Ansprüche,
dadurch **gekennzeichnet,**
daß der Klemmbereich, in dem der Endabschnitt (18) des Walzenmantels (12) durch das Spannband (22) bzw. den hochfesten Faden (38) an der Außenumfangsfläche (20) der Stirnwand (16) festgelegt ist, durch eine sich über den Umfang der Stirnwand (16) erstreckende Abdeckung (28) geschützt ist.

13. Preßwalze nach Anspruch 12,
dadurch **gekennzeichnet,**
daß die Abdeckung (28) mehrere über den Umfang der Stirnwand (16) verteilte, beispielsweise aus Blech bestehende Segmente (30) umfaßt.

14. Preßwalze nach Anspruch 12 oder 13,
dadurch **gekennzeichnet,**
daß die Abdeckung (28) bzw. deren Segmente (30) ein winkelartiges Querschnittsprofil mit einem sich allgemein axial erstreckenden, den Klemmbereich überdeckenden Abschnitt (32) und einem sich allgemein radial nach innen erstreckenden Abschnitt (34) besitzen, der im montierten Zustand vorzugsweise an einer axial äußeren Stirnseite (36) der Stirnwand (16) anliegt.

15. Preßwalze nach Anspruch 12,
dadurch **gekennzeichnet,**
daß die Abdeckung einen in Umfangsrichtung über den Klemmbereich geführten Gummiring umfaßt.

16. Preßwalze nach Anspruch 1,
dadurch **gekennzeichnet,**
daß das Spannband endlos und bei erhöhter Temperatur in Umfangsrichtung schrumpfbar ist.

17. Preßwalze nach Anspruch 1,
dadurch **gekennzeichnet,**
daß das Spannband aus Windungen oder Strängen einzelner kleinerer, z.B. einen runden Querschnitt aufweisender Fäden besteht.

18. Preßwalze nach einem der vorhergehenden Ansprüche,
dadurch **gekennzeichnet,**
daß die Stirnwand radial nachgiebig ausgebildet ist.

19. Preßwalze nach Anspruch 18,
dadurch **gekennzeichnet,**
daß die Stirnwand als aufblasbarer Torusschlauch ausgebildet ist.
